(19) Europäisches Patentamt / European Patent Office / Office européen des brevets

(11) **EP 4 293 956 B1**

(12) **EUROPEAN PATENT SPECIFICATION**

(45) Date of publication and mention
of the grant of the patent:
**21.05.2025 Bulletin 2025/21**

(21) Application number: **22179244.3**

(22) Date of filing: **15.06.2022**

(51) International Patent Classification (IPC):
$H04L\ 9/40$ (2022.01)      $G06N\ 20/00$ (2019.01)
$G06F\ 21/55$ (2013.01)      $G06F\ 21/56$ (2013.01)
$G06N\ 3/045$ (2023.01)      $G06N\ 3/088$ (2023.01)
$G06N\ 3/09$ (2023.01)

(52) Cooperative Patent Classification (CPC):
H04L 63/20; G06F 21/554; G06F 21/562;
G06N 3/045; G06N 3/088; G06N 3/09;
H04L 63/1416; H04L 63/1441

(54) **METHOD FOR PREDICTING MALICIOUS DOMAINS**

VERFAHREN ZUM VORHERSAGEN VON BÖSARTIGEN DOMÄNEN

PROCÉDÉ DE PRÉDICTION DE DOMAINES MALVEILLANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.12.2023 Bulletin 2023/51**

(73) Proprietor: **Heimdal Security A/S
1606 Copenhagen V (DK)**

(72) Inventors:
• **Rusu, Valentin
330334 Bucharest (RO)**
• **Cernei, Eugeniu
061079 Bucharest (RO)**

(74) Representative: **Chas. Hude A/S
Langebrogade 3B
1411 Copenhagen K (DK)**

(56) References cited:
US-A1- 2016 065 597     US-A1- 2020 351 279
US-A1- 2021 377 303

• DOYEN SAHOO ET AL: "Malicious URL Detection using Machine Learning: A Survey", ARXIV.ORG, CORNELL UNIVERSITY LIBRARY, 201 OLIN LIBRARY CORNELL UNIVERSITY ITHACA, NY 14853, 25 January 2017 (2017-01-25), XP081467023
• SPAULDING JEFFREY ET AL: "Defending Internet of Things Against Malicious Domain Names using D-FENS", 2018 IEEE/ACM SYMPOSIUM ON EDGE COMPUTING (SEC), IEEE, 25 October 2018 (2018-10-25), pages 387 - 392, XP033468940, DOI: 10.1109/SEC.2018.00051

**Description**

**Area of the invention**

The invention relates to the area of internet security and more specifically to the area of detecting malicious domains and taking precautions against such malicious domains.

**Background of the invention**

Security on the internet and precautions against malicious domains is a growing concern to users of the internet. Where the problem for a long time was primarily connected to the unsystematic interruption of random activities, the problem has become increasingly serious as the systematic approach to this is undertaken by criminals and consequences are often severe and may cause business interruption for longer periods and hence cause severe financial losses.

For that reason, there has also been a focus on developing technology that may predict/identify malicious domains and there are a number of these disclosed in the patent literature.

In US 2021/0377303 a method is disclosed, aiming at determining the likelihood of a domain being malicious. The method uses several components, including a trained machine learning model to predict the likelihood.

In US 2021/0360013 a method is disclosed, where a malicious domain is detected through obtaining network connection data of an electronic device and capturing log data related to at least one domain name from the network connection data.

Even though these previously known methods provide some remedy to the problem there is still a need for improvement of the technology as the accuracy and efficiency of the known methods still leave room for improvement.

For that reason, the present invention provides improvement in the accuracy and efficiency of the technology in respect of identifying the malicious domains.

**Summary of the invention**

According to the invention this is achieved through a method for calculating the probability of a domain being malicious based on an input data set for processing in a computer system, the method comprising:

- Dataset extraction, comprising extracting two types of input data:

  o Network data, selected from WHOIS, DNS, Reverse PTR, Domain Ranking and popularity data, Domain Authority
  o Domain Word embeddings data

- Data preprocessing including transforming network data from sparse to dense through feature averaging, picking the most common options, finding correlating features, or choosing a default value for unfilled data, depending on the feature type;
- Data preprocessing, including transforming claimable data in a vectorial representation, e.g. through a natural language processing network such as trained neural network;
- Data engineered databases for temporary storing (caching) claimable and network data;
- Data processing the preprocessed data through a trained tree-based neural network to determine the probability of a domain being malicious.

Hereby network data means data extracted from authoritative services (e.g., Whois, DNS, reverse PTR) and claimable data means data extracted from the actual domain name (embeddings)

Through such method according to the invention, the efficiency and accuracy of the process of identifying malicious domains can be significantly increased and hence provide for a safer online environment for the user of the method.

Advantageously the data preprocessing method for representing claimable data (words) as vectors, is trained unsupervised, using a model to predict a target context based on a nearby word.

The preprocessing may further comprise:

- Data preprocessing method for representing claimable data (words) as vectors using n-grams;
- Data preprocessing method for filling missing data;

Hereby the data processing algorithm uses a tree-based neural network.

Advantageously the data processing algorithm uses similarity scores, gains and thresholds for determining a probability.

Preferably the classifier uses a probability distribution to determine a risk factor.

Advantageously the method further comprises a probability system for determining the risk score of a domain.

Advantageously a probability distribution system for cybersecurity to perform the method is implemented.

Advantageously a method for reading data in batches for optimizing the resources used by a system is implemented in connection with the method according to the invention.

Further advantageously a method for minimizing the memory consumption by splitting the data reading and processing in CPU, RAM, Cache and HD memory is implemented in connection with the method according to the invention.

Advantageously a method for parallel learning and inference based on splitting the data in quantiles is implemented.

Further advantageous a method for training a hierarchical classifier, a binary tree on which each leaf node represents another feature word code generated with the Huffman tree algorithm.

The method according to the invention may further comprise one or more of the following features:

- A machine learning pipeline adapted to generate random trees and calculates each tree's gain and similarity score based on a threshold; calculating an output value and adjusting the weights based on the error rate (loss function), and through a second-order Taylor, approximation between the error rate (loss function), gradient (first derivate of the loss function) and hessian (second derivate of the loss function), calculating the needed adjustment for improving the accuracy based on a test dataset;
- A method adapted to convert odds to probabilities;
- A method adapted to use logistic functions for determining a probability score;
- A method adapted to use a minimizing negative likelihood function to calculate an error rate (loss function);
- A tree-based neural network adapted to combine sparse data from domains and word vector representations called embeddings.
- A method adapted to use a domain corpus
- A method adapted for classifying DNS attacks like typo squatting, phishing, and C&Cs using neural networks.
- A method adapted to use character-level n-grams for domain embeddings extraction.
- A method adapted to use cosine similarity for measuring the distance between domain embedding vectors.
- A method adapted to combine unsupervised and supervised neural networks.
- A method adapted to combine tree-boost networks with natural language processing networks.
- A network adapted to use hidden layers for n-grams for embeddings extraction.
- A network adapted to use subwords for correlation between words.
- A network adapted to sum the probabilities of words and subword embeddings.
- A method adapted to determine context words from a center word.
- A method adapted for generating n-grams starting from a word.
- A method adapted for training an unsupervised learning network on a supervised task that is ignored in the prediction step.
- A method adapted to use second-order derivate of the chain rule for reduction to canonical form.
- A method adapted for adjusting the vectorial representation of words to determine their correlation based on a corpus.
- A method adapted for generating random vectorial representations of words starting from a corpus.
- A method adapted for extracting Whois domain sparse data from authoritative services.
- A method adapted for extracting DNS domain sparse data from authoritative services.
- A method adapted for reverse IP lookup.
- A method adapted for extracting HTML code statistics.

The invention will be described in detail in the following with reference to the figures showing details of a preferred embodiment of the invention.

**List of figures**

FIG. 1 shows a data sample;
FIG. 2 shows data sample probabilities;
FIG. 3 shows data sample probabilities;

FIG. 4 shows data sample probabilities;
FIG. 5 shows data sample probabilities;
FIG. 6 shows data sample probabilities;
FIG. 7 shows data sample probabilities;
Fig. 8A and 8B shows data sample probabilities;
FIG. 9 shows data sample probabilities;
FIG. 10 shows data sample probabilities;
FIG. 11 shows data sample probabilities;
FIG. 12 shows data sample probabilities;
FIG. 13 shows data sample probabilities;
FIG. 14 shows data sample probabilities;
FIG. 15 shows data sample probabilities;
FIG. 16 shows data sample probabilities;
FIG. 17 shows data sample probabilities;
FIG. 18 shows data sample loss function;
FIG. 19 shows data sample loss function;
FIG. 20 shows data sample loss function;
FIG. 21 shows data sample probabilities;
FIG. 22 shows data sample probabilities;
FIG. 23 shows data sample probabilities;
FIG. 24 shows example of word processing;

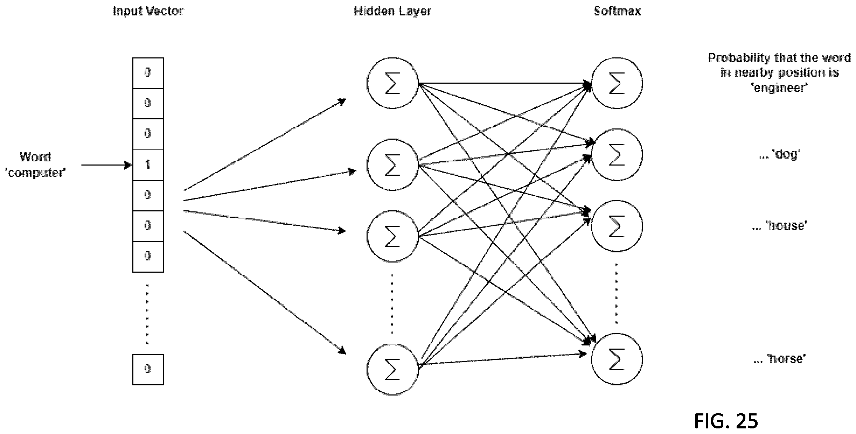

FIG. 25 shows example of word processing;
FIG. 26 shows example of word processing;
FIG. 27 shows example of word processing;
FIG. 28 shows example of domain classification process flow;

## Detailed description of preferred embodiment

The system for detecting the malicious domain comprises two neural networks.

The first neural network was developed as a gradient-boosting classification tree and trained on more than 30 DNS features and 6 million domains. The network was designed to work with very large and complicated datasets, as described in the following chapter.

For simplicity, the gradient boosting algorithm will be explained using only one dimension, one feature and 4 data samples.

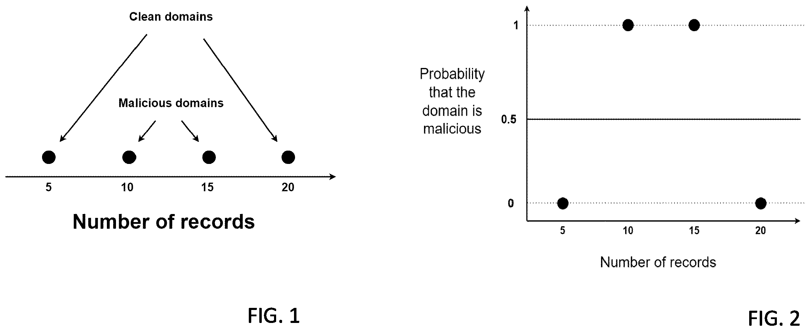

For the data sample from FIG. 1, the algorithm will make a default prediction of 0.5 since there is a 50% chance that a domain is malicious or not. Since the ground truth is known for the data samples (two malicious domains and two clean domains), their probability of being malicious is 0 or 1, as described in FIG. 2.

Since the initial prediction is 0.5 and the classes for samples are 0 or 1, the difference between ground truth and prediction is called **Residual** (the differences between Observed and Predicted values). It is a method for measuring the error and the quality of the prediction.

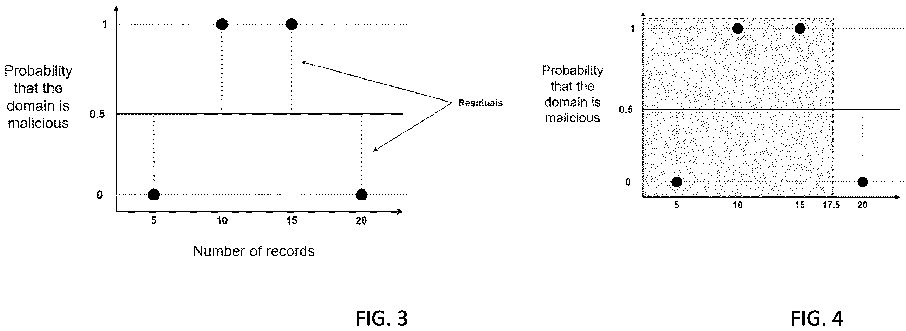

See FIG. 3.

In order to build the trees, the algorithm starts as a single leaf by putting the Residual into the node. For each leaf, it calculates a **Quality Score,** named **Similarity Score** for the Residuals.

$$Similarity\ Score = \frac{(\sum Residuals_i)^2}{\sum \left[Previous\ Probability_i \times (1 - Previous\ Probability_i)\right] + \lambda}$$

Where: $\lambda$ (lambda) is a Regularization parameter

For Residuals = -0.5, 0.5, 0.5, -0.5 and $\lambda$ = 0:

$$Similarity\ Score = \frac{(-0.5 + 0.5 + 0.5 - 0.5)^2}{\sum \left[Previous\ Probability_i \times (1 - Previous\ Probability_i)\right] + 0}$$

$$Similarity\ Score = \frac{0}{\sum \left[Previous\ Probability_i \times (1 - Previous\ Probability_i)\right] + 0}$$

*Similarity Score* = 0

The similarity score for the first leaf is 0. The algorithm can now split the Residuals into multiple groups to search for better results.

See FIG. 4.

A threshold of 17.5 (the mean value between the values of the domains 20 and 15) will split the Residuals into two leaves.

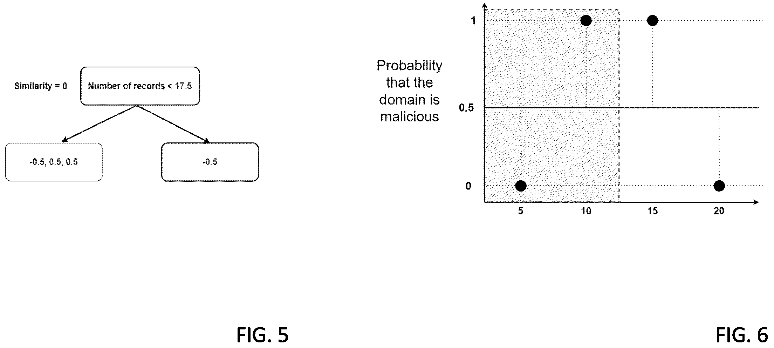

See FIG. 5.

*Previous Probability = Prediction from the initial leaf* = 0.5

$$Similarity\ Score\ Left\ Node$$
$$= \frac{(-0.5 + 0.5 + 0.5)^2}{[0.5 \times (1 - 0.5)] + [0.5 \times (1 - 0.5)] + [0.5 \times (1 - 0.5)] + 0}$$

*Similarity Score Left Node* = 0.33

$$Similarity\ Score\ Right\ Node = \frac{(-0.5)^2}{[0.5 \times (1 - 0.5)] + 0}$$

*Similarity Score Right Node* = 1

At this point, the algorithm needs a metric to quantify if the leaves cluster similar **Residuals** better than the root. The property is called **Gain,** and it aggregates the **Similarity Scores.**

$$Gain = Left_{Similarity} + Right_{Similarity} - Root_{Similarity}$$

$$Gain = 0.33 + 1 - 0 = 1.33$$

The algorithm needs to calculate the gain value for each threshold (17.5, 12.5, 7.5) and keep the one with the more significant value as the root node.

See FIG. 6.

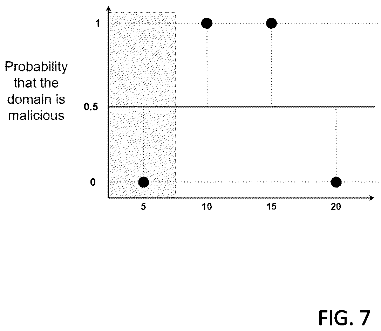

See FIG. 7.

The largest Gain value can be achieved with a threshold of 17.5, which makes it the starting node. After deciding on the starting node, the same algorithm should be applied for the remaining nodes.

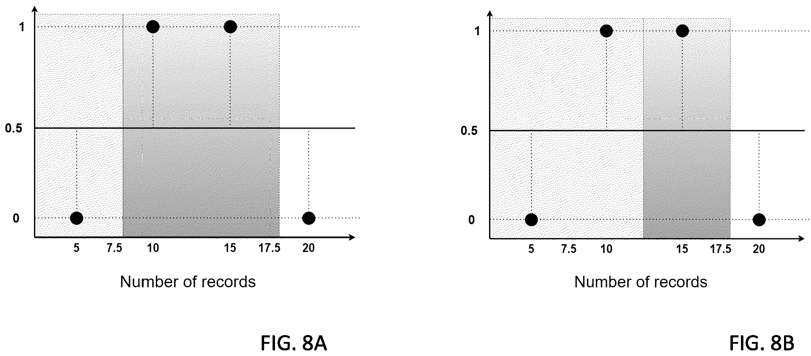

See FIG. 8.

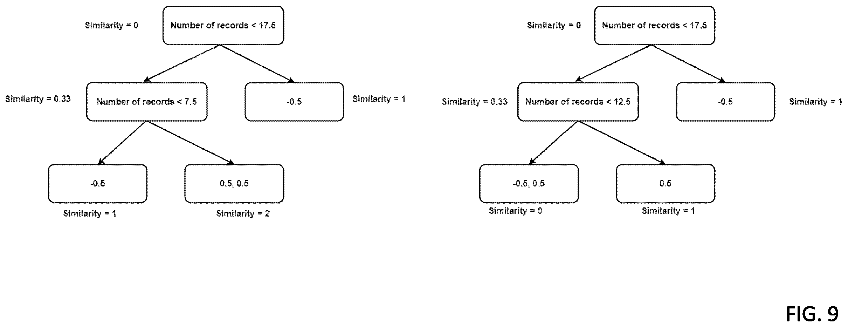

See FIG. 9.

The threshold lower than 7.5 has a better gain value and will be selected as the best candidate for the 2nd level node. The algorithm continues like that for the defined depth, which is six by default. The tree depth is a hyperparameter that will be optimized during training period.

Once the tree is done, there is a **Prune** method for dimensionality reduction. The algorithm **Prune** a tree based on its Gain values. The terminology for Prune value is gamma (y). The algorithm will calculate the difference between the Gain of the lowest branch and Prune value. If the difference is negative, the branch will be removed. For $\gamma$ =3, all the branches will be removed, and all that would be left is the original prediction since the Gain for the second branch is 2.66, and the Gain for the first branch is 1.33. For $\gamma$ =2, the tree will remain the same since the second branch is 2.66.

$$Gain - \gamma = \begin{cases} > 0 & , do\ not\ prune \\ < 0 & , prune \end{cases}$$

Based on the below formula, lambda is a regularization parameter that reduces de similarity scores and the gain value implicitly. For a $\lambda = 1$, the Gain values for the first and second branches will be 0.34 and 0.72, while for $\lambda = 0$, they are 1.33 and 2.66. This implies that values for $\lambda$ greater than 0 will reduce the sensitivity of the tree to individual observations by pruning and combining them with other observations.

$$Similarity\ Score = \frac{(\sum Residuals_i)^2}{\sum [Previous\ Probability_i \times (1 - Previous\ Probability_i)] + \lambda}$$

The output of a leaf node can be calculated using the following formula

$$Output\ value = \frac{(\sum Residuals_i)}{\sum [Previous\ Probability_i \times (1 - Previous\ Probability_i)] + \lambda}$$

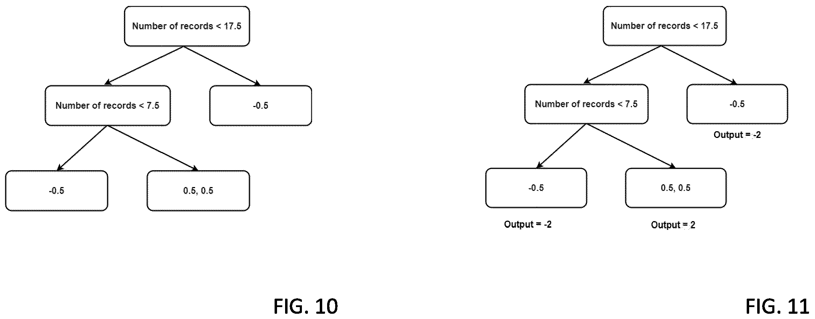

See FIG. 10.

for $\lambda = 0$

$$Output\ value = \frac{(-0.5)}{[0.5 \times (1 - 0.5)] + 0} = -2$$

for A = 1

$$Output\ value = \frac{(-0.5)}{[0.5 \times (1 - 0.5)] + 1} = -0.4$$

When $\lambda > 0$, it reduces the amount that a single observation adds to the new prediction. Thus, it reduces the prediction's sensitivity to isolated observations.
See FIG. 11.
At this point, the first tree is ready. Based on that information, the algorithm can make a new Prediction. In order to build a new prediction, the algorithm should start from the initial prediction. Since the Predictions are in terms of the log(odds) and the leaf is derived from Probability, the results cannot be added together without a transformation.

$$\left(\frac{p}{1 - p}\right) = odds$$

$$\log\left(\frac{p}{1 - p}\right) = \log(odds)$$

**Predicted Domain Maliciousness**

0.5 $\longrightarrow$ $\log\left(\frac{0.5}{1 - 0.5}\right) = \log(odds)$

$$0 = \log(odds)$$

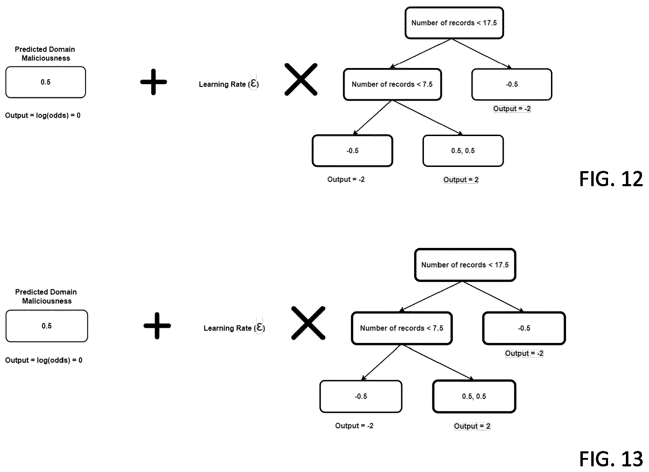

See FIG. 12.

$$\log(odds)\ Prediction = \log(odds)\ Original\ Prediction + \varepsilon \times Tree\ Output\ Value$$

In order to determine the prediction value, the algorithm should calculate the sum of the original prediction with the output value scaled by the Learning Rate (the default value is 0.3). If the learning rate would not scale the output, their sum will end up as the original prediction. Thus, a learning rate is used to scale the contribution from the new tree, and its value is between 0 and 1. If the learning rate would not be used, the algorithm will end up with low **Bias** (the simplifying assumptions made by the model to make the target function easier to approximate) but very high Variance (the amount that the estimate of the target function will change given different training data).

$$\log(odds)\ Prediction = 0 + 0.3 \times (-2) = -0.6$$

To convert a log(odds) value into a probability, it needs to be plugged into a Logistic Function

$$Probability = \frac{e^{\log(odds)}}{1 + e^{\log(odds)}}$$

$$Probability = \frac{e^{-0.6}}{1 + e^{-0.6}} = 0.35$$

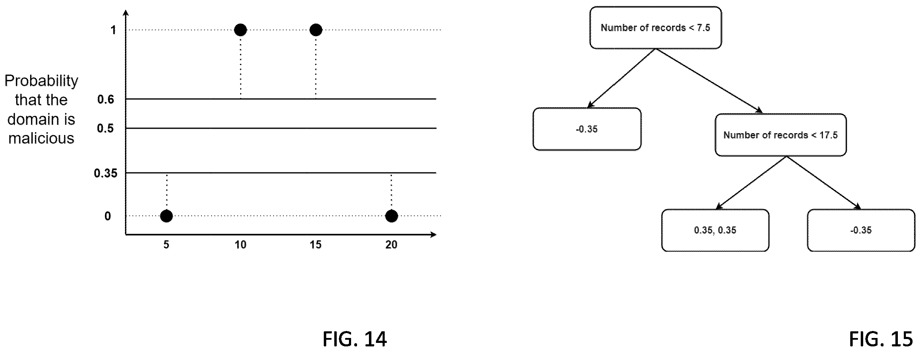

See FIG. 13.
The algorithm should calculate the predicted output for each data sample based on its residual value.
See FIG. 14.
The residuals are smaller than before, which means that the algorithm made a small step in the right direction. With new residuals, the algorithm can build new trees that will better fit the data.
See Fig. 15
In the second tree, calculating the Similarity Score is different, considering that Previous Probabilities are no longer the same for all the observations (same for Output Value).

$$Similarity\ Score = \frac{(\sum Residuals_i)^2}{\sum [Previous\ Probability_i \times (1 - Previous\ Probability_i)] + \lambda}$$

$$Similarity\ Score$$
$$= \frac{(\sum Residuals_i)^2}{[(0.35) \times (1 - 0.35)] + [(0.65) \times (1 - 0.65)] + [(0.65) \times (1 - 0.65)] + [(0.35) \times (1 - 0.35)] + \lambda}$$

After building another tree, the algorithm will make new predictions that will return smaller residuals and build new trees. It will keep building trees until the residuals are small enough or reach the maximum number of trees.

**Mathematical implementation**

The Loss Function used in the classification process is the negative log-likelihood.

$$L(y_i, p_i) = -[y_i \log(p_i) + (1 - y_i)\log(1 - p_i)]$$

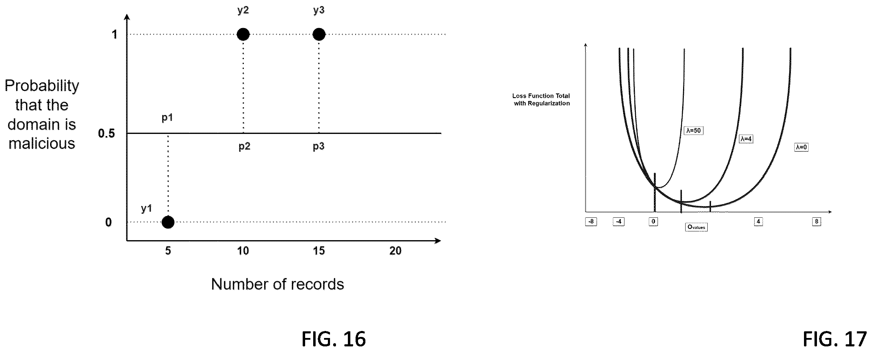

See FIG. 16.
The algorithm uses the loss function to build trees by minimizing the following equation.

$$\left[\sum_{i=1}^{n} L(y_i, p_i)\right] + \gamma T + \frac{1}{2}\lambda O_{value}^2$$

T is the number of terminal nodes or leaves in a tree, and $\lambda$ **(gamma)** is a user-defined penalty. It will not be used in future mathematic calculus since it is used in pruning, which takes place after the whole tree is built. For this reason, it plays no role in deriving the **Optimal Output Values** or **Similarity Scores.**

$$\left[\sum_{i=1}^{n} L(y_i, p_i)\right] + \frac{1}{2}\lambda O_{value}^2$$

**Loss Function        +        Regularization Term**

The goal is to find an **Output Value ($O_{value}$)** for the leaf that minimizes the whole equation.

If different values are used for the output of the leaves for different residuals and different regularization values, the result will be as shown in the following graph. When the **Regularization** is 0, then the optimal $O_{value}$ is at the bottom of the blue parabola, where the derivative is 0. If the $\lambda$ (lambda) is increased, the lowest point in the parabola shifts closer to 0.

See FIG. 17.

To explain the math behind the loss function, it would be easier to remove the Regularization by setting $\lambda$ (lambda) to 0.

The algorithm uses the **Second Order Taylor Approximation** to determine the optimal **Output Value.**

$$\left[\sum_{i=1}^{n} L(y_i, p_i)\right] + \frac{1}{2}\lambda O_{value}^2$$

$$p_i = p_i^0 + O_{value}$$

$$\boxed{\left[\sum_{i=1}^{n} L(y_i, p_i^0 + O_{value})\right]} + \frac{1}{2}\lambda O_{value}^2$$

$$\Updownarrow$$

$$L(y_i, p_i^0 + O_{value}) \approx \boxed{L(y_i, p_i)} + \boxed{\left[\frac{d}{dp_i}L(y_i, p_i)\right]}O_{value} + \frac{1}{2}\boxed{\left[\frac{d^2}{dp_i^2}L(y_i, p_i)\right]}O_{value}^2$$

| **Loss Function** for the previous prediction | The 1$^{st}$ derivate of the **Loss Function**  **Gradient (g)** | The 2$^{nd}$ derivate of the **Loss Function**  **Hessian (h)** |
|---|---|---|

$$L(y_i, p_i^0 + O_{value}) \approx L(y_i, p_i) + \boldsymbol{g}\, O_{value} + \frac{1}{2}\boldsymbol{h}\, O_{value}^2$$

$$\left[\sum_{i=1}^{n} L(y_i, p_i^0 + O_{value})\right] + \frac{1}{2}\lambda O_{value}^2$$

$$\boxed{\phantom{aaaaaaaaaaaaaaaaaa}}$$

$\Uparrow$ **Expend the summation**

$$L(y_1, p_1^0 + O_{value}) + L(y_2, p_2^0 + O_{value}) + \cdots + L(y_n, p_n^0 + O_{value}) + \frac{1}{2}\lambda O_{value}^2$$

**Plug in the Second Order Taylor Approximation for each Loss Function**

$\Updownarrow$

$$L(y_1, p_1^0) + g_1 O_{value} + \frac{1}{2}h_1 O_{value}^2 + L(y_2, p_2^0) + g_2 O_{value} + \frac{1}{2}h_2 O_{value}^2$$
$$+ \dots + L(y_n, p_n^0) + g_n O_{value} + \frac{1}{2}h_n O_{value}^2 + \frac{1}{2}\lambda O_{value}^2$$

The end objective is to find an Output Value that minimizes the Loss Function with Regularization. For this reason, the terms that do not contain the Output Value can be removed since they do not affect the optimal value.

$$L(\cancel{y_1}, p_1^0) + g_1 O_{value} + \frac{1}{2}h_1 O_{value}^2 + L(\cancel{y_2}, p_2^0) + g_2 O_{value} + \frac{1}{2}h_2 O_{value}^2$$
$$+ \dots + L(\cancel{y_n}, p_n^0) + g_n O_{value} + \frac{1}{2}h_n O_{value}^2 + \frac{1}{2}\lambda O_{value}^2$$

$$g_1 O_{value} + \frac{1}{2}h_1 O_{value}^2 + g_2 O_{value} + \frac{1}{2}h_2 O_{value}^2 + \dots + g_n O_{value} + \frac{1}{2}h_n O_{value}^2$$
$$+ \frac{1}{2}\lambda O_{value}^2$$

$$(g_1 + g_2 + \dots + g_n) O_{value} + \frac{1}{2}(h_1 + h_2 + \dots + h_n + \lambda) O_{value}^2$$

To minimize a function, the algorithm should take the derivate with respect to the output value and set the derivative equal to 0

$$\frac{d}{dO_{value}}(g_1 + g_2 + \dots + g_n) O_{value} + \frac{1}{2}(h_1 + h_2 + \dots + h_n + \lambda) O_{value}^2 = 0$$

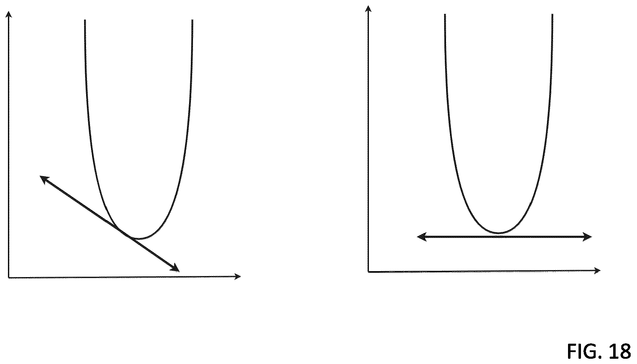

See FIG. 18.

After derivation:

$$(g_1 + g_2 + ... + g_{n)} + (h_1 + h_2 + \cdots + h_n + \lambda)O_{value} = 0$$

$$O_{value} = \frac{-(g_1 + g_2 + ... + g_{n)}}{(h_1 + h_2 + \cdots + h_n + \lambda)}$$

For the following Classification Loss Function:

$$L(y_i, p_i) = -[y_i \log(p_i) + (1 - y_i)\log(1 - p_i)]$$

$$L(y_i, \log(odds)_i) = -y_i \log(odds) + \log(1 + e^{\log(odds)})$$

$$\frac{d}{d\log(odds)} L(y_i, \log(odds)_i) = -y_i \frac{e^{\log(odds)_i)}}{1 + e^{\log(odds)_i}}$$

$$\frac{d^2}{d\log(odds)^2} L(y_i, \log(odds)_i) = \frac{e^{\log(odds))}}{1 + e^{\log(odds)}} \; x \; \frac{1}{1 + e^{\log(odds)}}$$

Since

$$p_i = \frac{e^{\log(odds)_i)}}{1 + e^{\log(odds)_i}}$$

Then the algorithm can convert log(odds) back to probabilities

$$Gradient \; g_i = \frac{d}{d\log(odds)} L(y_i, \log(odds)_i) = -y_i \frac{e^{\log(odds)_i)}}{1 + e^{\log(odds)_i}} = -(y_i - p_i)$$

$$Hessian \; h_i = \frac{d^2}{d\log(odds)^2} L(y_i, \log(odds)_i) = \frac{e^{\log(odds))}}{1+e^{\log(odds)}} \; x \; \frac{1}{1+e^{\log(odds)}} = p_i \; x \; (1 - p_i)$$

$$O_{value} = \frac{-(g_1 + g_2 + ... + g_{n)}}{(h_1 + h_2 + \cdots + h_n + \lambda)}$$

$$O_{value} = \frac{-(-(y_1 - p_1) + -(y_2 - p_2) + ... + -(y_n - p_n))}{(p_1 \; x \; (1 - p_1) + p_2 \; x \; (1 - p_2) + \cdots + p_n \; x \; (1 - p_n) + \lambda)}$$

$$O_{value} = \frac{(\sum Residual_i)}{\sum [Previous\ Probability_i \times (1 - Previous\ Probability_i)] + \lambda}$$

For a Regression Loss Function:

$$L(y_i, p_i) = \frac{1}{2}(y_i - p_i)^2$$

$$g_i = \frac{d}{dp_i}\frac{1}{2}(y_i - p_i)^2 = -(y_i - p_i)$$

$$h_i = \frac{d^2}{dp_i^2}\frac{1}{2}(y_i - p_i)^2 = \frac{d}{dp_i} -(y_i - p_i) = 1$$

$$O_{value} = \frac{-(-(y_1 - p_1) + -(y_2 - p_2) + \dots + -(y_n - p_n))}{(1 + 1 + \dots + 1 + \lambda)}$$

$$O_{value} = \frac{Sum\ of\ Residuals}{Number\ of\ Residuals + \lambda}$$

Now, the algorithm can calculate the **Output Value** for each leaf by plugging derivatives of the **Loss Functions** into the equation for the **Output Value,** but to grow the tree, the algorithm needs to derive the equations for the **Similarity Score.**

Remember that the algorithm derived the equation for the $O_{value}$ by minimizing the sum of the **Loss Functions** plus the **Regularization.** Thus, depending on the **Loss Function,** optimizing it might be challenging, so it was approximated with a **Second-Order Taylor Polynomial.**

$$\left[\sum_{i=1}^{n} L(y_i, p_i^0 + O_{value})\right] + \frac{1}{2}\lambda O_{value}^2$$

That being said, starting from the above equation, the algorithm ends up with the below value, as proved before.

$$(g_1 + g_2 + \dots + g_n)O_{value} + \frac{1}{2}(h_1 + h_2 + \dots + h_n + \lambda)O_{value}^2$$

Because the constants have been removed when deriving the equation, the end up equation is not equal to the starting one. However, if both equations are plotted on a graph, the same **x-axis** coordinate represented by the $O_{value}$ tells the location of the lowest points in both parabolas.

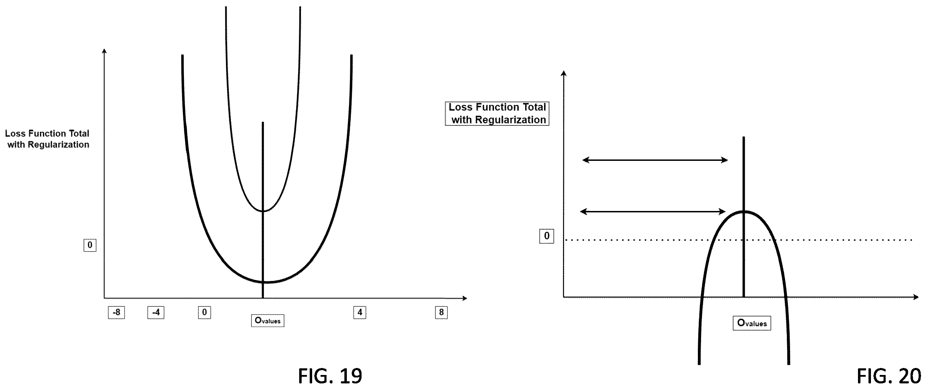

See FIG. 19.

$$O_{value} = \frac{-(g_1 + g_2 + \dots + g_n)}{(h_1 + h_2 + \dots + h_n + \lambda)}$$

The algorithm uses the simplified version to determine the Similarity Score. The first thing is to multiple everything by negative 1, which will flip the parabola over the horizontal line y=0.

$$-1\,x\,[(g_1 + g_2 + \dots + g_n)O_{value} + \frac{1}{2}(h_1 + h_2 + \dots + h_n + \lambda)O_{value}^2]$$

$$-(g_1 + g_2 + \dots + g_n)O_{value} - \frac{1}{2}(h_1 + h_2 + \dots + h_n + \lambda)O_{value}^2$$

See FIG. 20.

Now, the optimal $O_{value}$ represents the **x-axis** coordinate for the highest point on the parabola, which is the **Similarity Score.** However, the **Similarity Score** used in the implementation is actually two times that number.

$$-(\boldsymbol{g_1} + \boldsymbol{g_2} + ...+ \boldsymbol{g_{n)}})O_{value} -\frac{1}{2}( \boldsymbol{h_1} + \boldsymbol{h_2} + \cdots+ \boldsymbol{h_n} + \lambda)O^2_{value}$$

$$O_{value} = \frac{-(\boldsymbol{g_1} + \boldsymbol{g_2} + ...+ \boldsymbol{g_{n)}})}{( \boldsymbol{h_1} + \boldsymbol{h_2} + \cdots+ \boldsymbol{h_n} + \lambda)}$$

$$-(\boldsymbol{g_1} + \boldsymbol{g_2} + ...+ \boldsymbol{g_{n)}})\frac{-(\boldsymbol{g_1} + \boldsymbol{g_2} + ...+ \boldsymbol{g_{n)}})}{( \boldsymbol{h_1} + \boldsymbol{h_2} + \cdots+ \boldsymbol{h_n} + \lambda)} -\frac{1}{2}( \boldsymbol{h_1} + \boldsymbol{h_2} + \cdots$$

$$+ \boldsymbol{h_n} + \lambda)\left[\frac{-(\boldsymbol{g_1} + \boldsymbol{g_2} + ...+ \boldsymbol{g_{n)}})}{( \boldsymbol{h_1} + \boldsymbol{h_2} + \cdots+ \boldsymbol{h_n} + \lambda)}\right]^2$$

$$\frac{(\boldsymbol{g_1} + \boldsymbol{g_2} + ...+ \boldsymbol{g_{n)}})^2}{(\boldsymbol{h_1} + \boldsymbol{h_2} + \cdots+ \boldsymbol{h_n} + \lambda)} -\frac{1}{2}( \boldsymbol{h_1} + \boldsymbol{h_2} + \cdots+ \boldsymbol{h_n} + \lambda )\frac{(\boldsymbol{g_1} + \boldsymbol{g_2} + ...+ \boldsymbol{g_{n)}})^2}{(\boldsymbol{h_1} + \boldsymbol{h_2} + \cdots+ \boldsymbol{h_n} + \lambda)^2}$$

$$\frac{(\boldsymbol{g_1} + \boldsymbol{g_2} + ...+ \boldsymbol{g_{n)}})^2}{(\boldsymbol{h_1} + \boldsymbol{h_2} + \cdots+ \boldsymbol{h_n} + \lambda)} -\frac{1}{2} \frac{(\boldsymbol{g_1} + \boldsymbol{g_2} + ...+ \boldsymbol{g_{n)}})^2}{(\boldsymbol{h_1} + \boldsymbol{h_2} + \cdots+ \boldsymbol{h_n} + \lambda)}$$

$$Similarity\ Score = \cancel{\frac{1}{2}}\frac{(\boldsymbol{g_1} + \boldsymbol{g_2} + ...+ \boldsymbol{g_{n)}})^2}{(\boldsymbol{h_1} + \boldsymbol{h_2} + \cdots+ \boldsymbol{h_n} + \lambda)}$$

In the algorithm implementation, the ½ is omitted since the **Similarity Score** is a relative measure, and as long as every **Similarity Score** is scaled with the same amount, the results of the comparisons will be the same.

$$Similarity\ Score = \frac{(\boldsymbol{g_1} + \boldsymbol{g_2} + ...+ \boldsymbol{g_{n)}})^2}{(\boldsymbol{h_1} + \boldsymbol{h_2} + \cdots+ \boldsymbol{h_n} + \lambda)}$$

For the following Classification Loss Function:

$$L(y_i, p_i) = -[y_i \log(p_i) + (1 - y_i)\log (1 - p_i) ]$$

$$Gradient\ g_i = \frac{d}{d \log (odds)} L(y_i, \log (odds)_i) = -y_i \frac{e^{\log(odds)_i)}}{1 + e^{\log(odds)_i}} = -(y_i - p_i)$$

$$Hessian\ h_i = \frac{d^2}{d \log (odds)^2} L(y_i, \log (odds)_i) = \frac{e^{\log (odds)})}{1+e^{\log (odds)}} \ x\ \frac{1}{1+e^{\log (odds)}} = p_i\ x\ (1 - p_i)$$

$$Similarity\ Score = \frac{(-(y_1 - p_1) + -(y_2 - p_2) + ...+ -(y_n - p_n))}{( p_1\ x\ (1 - p_1) + p_2\ x\ (1 - p_2) + \cdots+ p_n\ x\ (1 - p_n) + \lambda)}$$

$$Similarity\ Score = \frac{(\sum Residual_i)^2}{\sum [Previous\ Probability_i \times (1 - Previous\ Probability_i)] + \lambda}$$

For a Regression Loss Function:

$$L(y_i, p_i) = \frac{1}{2}(y_i - p_i)^2$$

$$g_i = \frac{d}{dp_i}\frac{1}{2}(y_i - p_i)^2 = -(y_i - p_i)$$

$$h_i = \frac{d^2}{dp_i^2}\frac{1}{2}(y_i - p_i)^2 = \frac{d}{dp_i}-(y_i - p_i) = 1$$

$$Similarity\ Score = \frac{(-(y_1 - p_1) + -(y_2 - p_2) + \ldots + -(y_n - p_n))^2}{(1 + 1 + \cdots + 1 + \lambda)}$$

$$Similarity\ Score = \frac{Sum\ of\ Residuals^2}{Number\ of\ Residuals + \lambda}$$

Optimization

The algorithm is very efficient with extensive datasets, as will be proved in this chapter.

The algorithm uses a **Greedy Algorithm** to build trees by setting up different threshold values. This works well for relatively small datasets but it is not fast enough for large amounts of data. For this reason, an **Approximate Greedy Algorithm** is better suited for large-scale datasets.

For the following dataset from the below image, a Greedy Algorithm will become slow since it will need to look at every possible threshold value. The dataset used in the following example only contains one feature. It will be very computationally expensive for a more complex dataset with more than 300 features to test every threshold.

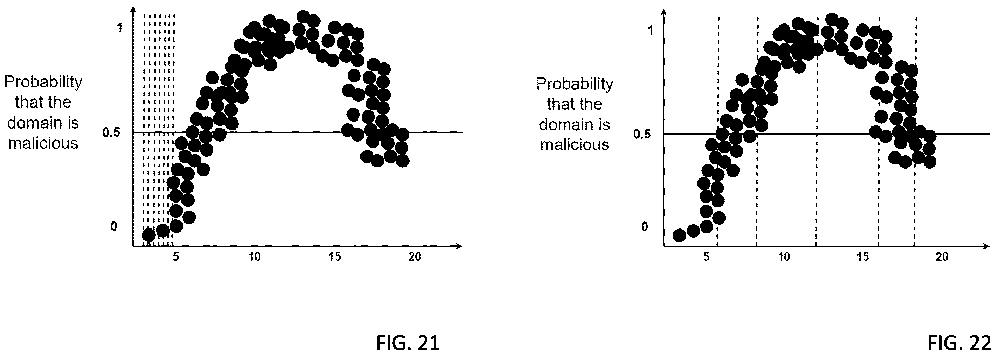

See FIG. 21

The **Approximate Greedy Algorithm** uses quantiles to define different threshold levels. The easiest definition for *quantile* is the position where a sample is divided into equal-sized, adjacent subgroups. It can also refer to dividing a probability distribution into areas of equal probability. The median is a quantile; the median is placed in a probability distribution so that exactly half of the data is lower than the median and half of the data is above the median. The median cuts a distribution into two equal areas, and so it is sometimes called 2-quantile. *Percentiles* are quantiles that divide the data into 100 equally sized groups. The median will be called the 50th percentile.

There are multiple ways to calculate the quantiles. Only R's quantile() function provides 9 different ways to calculate, each one resulting in slightly different results. Since it is not in the purpose of this technical review, the entire calculation details can be found in the following scheme.

| Type | $h$ | $Q_p$ | Notes |
|---|---|---|---|
| R-1, SAS-3, Maple-1 | $Np + 1/2$ | $x_{\lceil h-1/2 \rceil}$ | Inverse of empirical distribution function. |
| R-2, SAS-5, Maple-2, Stata | $Np + 1/2$ | $(x_{\lceil h-1/2 \rceil} + x_{\lfloor h+1/2 \rfloor})/2$ | The same as R-1, but with averaging at discontinuities. |
| R-3, SAS-2 | $Np$ | $x_{\lfloor h \rceil}$ | The observation numbered closest to $Np$. Here, $\lfloor h \rceil$ indicates rounding to the nearest integer, choosing the even integer in the case of a tie. |
| R-4, SAS-1, SciPy-(0,1), Maple-3 | $Np$ | | Linear interpolation of the empirical distribution function. |
| R-5, SciPy-(1/2,1/2), Maple-4 | $Np + 1/2$ | | Piecewise linear function where the knots are the values midway through the steps of the empirical distribution function. |
| R-6, Excel, Python, SAS-4, SciPy-(0,0), Maple-5, Stata-altdef | $(N+1)p$ | $x_{\lfloor h \rfloor} + (h - \lfloor h \rfloor)(x_{\lceil h \rceil} - x_{\lfloor h \rfloor})$ | Linear interpolation of the expectations for the order statistics for the uniform distribution on [0,1]. That is, it is the linear interpolation between points $(p_h, x_h)$, where $p_h = h/(N+1)$ is the probability that the last of (N+1) randomly drawn values will not exceed the h-th smallest of the first N randomly drawn values. |
| R-7, Excel, Python, SciPy-(1,1), Maple-6, NumPy, Julia | $(N-1)p+1$ | | Linear interpolation of the modes for the order statistics for the uniform distribution on [0,1]. |
| R-8, SciPy-(1/3,1/3), Maple-7 | $(N+1/3)p + 1/3$ | | Linear interpolation of the approximate medians for order statistics. |
| R-9, SciPy-(3/8,3/8), Maple-8 | $(N+1/4)p + 3/8$ | | The resulting quantile estimates are approximately unbiased for the expected order statistics if $x$ is normally distributed. |

Source: Wikipedia

The Approximate Greedy Algorithm in this algorithm means that instead of testing all possible thresholds, it only tests the quantiles. By default, the algorithm uses about 33 quantiles. There are about 33 quantiles and not precisely 33, because the algorithm uses **Parallel Learning** and **Weighted Quantile Sketch,** as will be explained.

See FIG. 22

When there is a large volume of that, that cannot be fitted into a computer's memory at one time, finding quantiles and sorting lists will become very slow. To solve this problem, a class of algorithms called **Sketches** can quickly create approximate solutions.

It can be split into small pieces for a very large dataset that will be processed on a network. The **Quantile Sketch Algorithm** combines the values for each splice and creates an approximate histogram. Based on the histogram, the algorithm can calculate approximate quantiles used in the **Approximate Greedy Algorithm.**

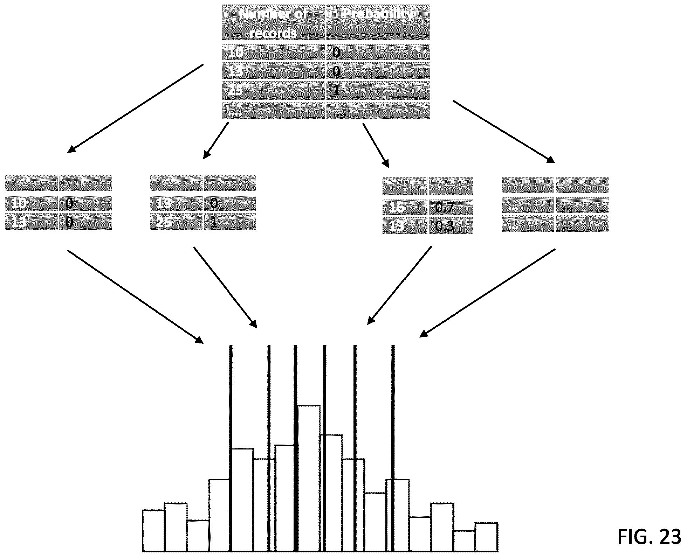

See FIG. 23

Usually quantiles are set up so that the same number of observations are in each one. In contrast, for **Weighted Quantiles,** each observation has a corresponding weight, and the sum of the **Weights** are the same in each quantile. The weight for each observation is the 2nd derivate of the **Loss Function,** which is referred as **Hessian.** For regression the weights are all equal to 1, which means that the weighted quantiles are just like normal quantiles and contain an equal number of observations. In contrast, for Classification the weights are:

$$Weight = Previous\ Probability_i \times (1 - Previous\ Probability_i)$$

In practice, weights are calculated after the tree is built.

| Number of records | Weight | Probability |
|---|---|---|
| 10 | 0.2 | 0 |
| 13 | 0.01 | 0 |
| 25 | 0.06 | 1 |
| …. | … | …. |

Every computer has a **CPU** (Central Processing Unit) that has a small amount of **Cache Memory.** The CPU can use this memory faster than any other memory in the computer. The CPU is also attached to a large amount of **Main Memory (RAM: Random Access Memory).** It is described as being fast but it is slower than cache memory. The CPU is also attached to the **Hard Drive.** The **Hard Drive** can store more data but it is the slowest of all memory options. The goal is to maximize the processing on **Cache Memory.** The procedure is called ***Cache-Aware Access.*** The algorithm puts the Gradients and Hessian in the Cache so that it can rapidly calculate Similarity Scores and Output Values.

When the dataset is too large for the Cache and RAM, some of it must be stored on the Hard Drive. Since reading and writing data to a hard drive is slow, the algorithm tries to minimize these actions by compressing the data. The procedure is called **Block for Out-of-Core Computation.** Even if the CPU must spend time decompressing the data that comes from the Hard Drive, it can do it faster than the Hard Drive can read the data. Moreover, when there is more than one Hard Drive attached to the machine, the algorithm uses a database technique called **Sharding** to speed up the disk access. Then, when the CPU needs data, both drives can be reading data at the same time.

Moreover, the algorithm can speed up building trees by only looking at a random subset of features when deciding how to split the data.

The second neural network used for building the domain classifier is the skip - gram network with n - grams word embeddings.

Dataset

In natural language processing, as far as tasks are concerned (Classification, Machine translation, Cbow, Skip-gram, Natural Language Understating, etc.), the model is trained based on a dataset. The dataset is a collection of texts called Corpus in literature (body in Latin). This can be composed of groups of texts written in a single language or in multiple languages. There are various reasons for having multilingual Corpora (plural for Corpus), especially in text understanding and machine translation, where the correlation between words in multiple languages and their correlated synonyms should be well determined. For example, in English, the words 'same' and 'equal' are synonyms but translated into another language, they can result in different words.

The dataset highly influences the model's performance. For example, themed texts, like historical or modern (making use of neologisms), can affect the model's accuracy and text understanding results when used for classifying regular vocabulary.

Since the task is domain classification, there is no language in which the domains have a meaning. Even if many of them are based on a name or words from vocabulary like 'example.com', there are many randomly generated domains like 'asfgfdewgfdsagtersdd.com'. Another example, the word 'google' was not in any vocabulary until recently, proving that domain names do not always have a meaning.

For those reasons, the corpus is composed exclusively of domains. The main task of the neural network is to understand the correlation between words in the corpus and calculate the probability of words and contexts in a sentence. Since domains don't have a meaning in most languages, a multilingual corpus would not be helpful.

This is a unique element in NLP and in cybersecurity, to train a neural network on an invented 'language', the language of the domains, and to train the network to understand this language.

The dataset is composed of 50 million domains. They are all labeled domains, but that is not relevant for this neural network since it was trained unsupervised.

On the contrary, when combining the tree-based neural network with the natural language processing network, the labelled training dataset was composed of 6 million domains.

1. 3 million -> clean (benign) domains discovered by Heimdal Security through a ranking system. Most of them were highly used domains.

2. 3 million -> malicious (malign) and active domains. There is a big challenge to find malicious domains still active. The mean lifespan of an infected website is seven days. After this period, most of the zero-day websites are taken down. For this reason, it was a real challenge to find this number of active hostile websites. Moreover, all of the infected domains had to be labeled and used so that the dataset is balanced. The categories from the malicious dataset are: "Command and Control", "Phishing", "Typo squatting", and "General Malware".

**Natural Language Processing Model**

The model is derived from the continuous skip-gram model introduced by Mikolov et al (Tomas Mikolov, 2013). Computers cannot understand words, they understand numbers, so a vectorial representation of those words is necessary. Each word will be represented by a vector whose values will be adjusted during the training.

For example, if the corpus will be represented by the following words: computer, engineer, house, dog, horse. Each embedding will have a corresponding vector.

computer -> [1,0,0,0,0,0,0,0,0]
house -> [0,1,0,0,0,0,0,0,0]

engineer -> [0,0,1,0,0,0,0,0,0]

dog -> [0,0,0,1,0,0,0,0,0]

horse -> [0,0,0,0,1,0,0,0,0]

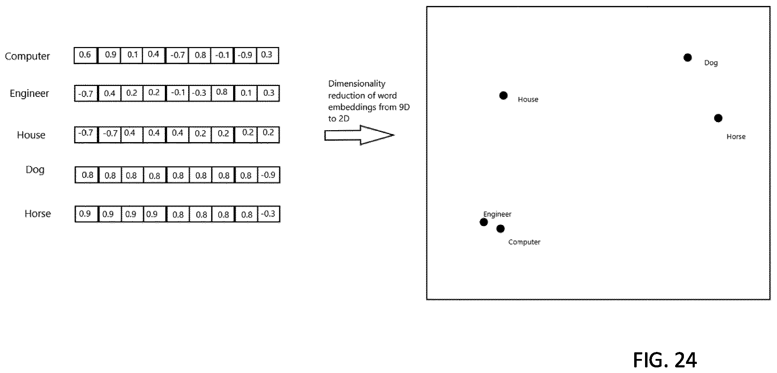

By the end of the training process, the word vectors should rearrange their values so that similar words will be close to each other in the multidimensional space, as shown in FIG. 24.

The phrases in the corpus determine the correlation between words. If the corpus contains phrases in which the words computer and horse are mutually related, the embeddings will be close in the multidimensional space. Hence the importance of a variate corpus, considering that the model will be as accurate as the dataset.

In practice, the computer engineers will use all the text in the training language, from Wikipedia, books, science articles, movie subtitles, emails, etc.

Since the model contains the domain's language, there will be no correlation between words, so the model should be adapted to subwords.

The original training algorithm proposed by Mikolov et al. for word embeddings fulfills two purposes, CBOW and Skip-Gram. Starting from a dataset of sentences, the algorithm chooses each word in the sentences and tries to predict its neighbors, also called the contexts. (Skip-gram). On the other hand, those contexts can be used to predict the current word (CBOW). The task needed for domains classification is Skip-gram since it is desired to determine variations of domains starting from a base. (google.com -> goooogle.com -> googleads.com -> google.dk, etc.)

The model architecture is composed of one or multiple hidden layers trained to perform a task with a SoftMax head. The network is not used for the trained task, and its only goal is to learn the weights in the hidden layers. The main advantage of this type of architecture is the unsupervised learning method because a supervised learning method would imply labeling the whole dataset. A labeling system would require a human to read and input the correlation between words in all the existing text in a language. That task would be close to impossible.

There is no dimensionality reduction layer during the training process. Since the input vector is formed by the number of words in the dictionary (50 million rows in the present corpus), each word will have a number of features (number of neurons in the hidden layers, 300). The output vector is the same size as the input, and each word in the input will get an assigned probability in the output.

At the end of the training process, only the hidden layer weight matrix is kept and used as word embeddings. The output layer is a SoftMax regression classifier that is no longer useful after the training.

Since the dataset is composed only of domains and no sentences, the algorithm proposed initially by Milkov et al. (Tomas Mikolov, 2013) cannot perform well. For this reason, an approach close to Mikolov in (Piotr Bojanowski, 2017) at Facebook AI Research is better suited.

Bojanowski et al. (Piotr Bojanowski, 2017) proposed a model that, given a word vocabulary of size W, the model will learn a vectorial representation for each w E {1,...,W} by maximizing a log-likelihood function between words and contexts (words surrounding w).

$$\sum_{t=1}^{T} \sum_{c \in \mathcal{C}_t} \log p(w_c \mid w_t)$$

The previously described model determines the probability of a context word using a SoftMax function.

$$p(w_c \mid w_t) = \frac{e^{s(w_t,\, w_c)}}{\sum_{j=1}^{W} e^{s(w_t,\, j)}}$$

Since multiple context words cannot be predicted from the center word (the dataset is composed only of domains), the model should be adapted to a different task as in Markov et al. 2017 (Piotr Bojanowski, 2017) using a binary logistic loss obtained from the negative log-likelihood.

$$\sum_{t=1}^{T} \left[ \sum_{c \in \mathcal{C}_t} \ell(s(w_t,\, w_c)) + \sum_{n \in \mathcal{N}_{t,c}} \ell(-s(w_t,\, n)) \right]$$

The most important feature of this network is the sub word model, a separate word representation that also considers the internal structure of words. Domains are words with multiple variations from a legit domain like google.com, an attacker can register a lookalike domain like googgle.com. This type of attack is called typosquatting, in which an attacker uses a spelling error to mislead the user into thinking that he is on a legit website. The most spread typosquatting is the dot extraction. A domain like 'www.example.com' can be reproduced as 'wwwexample.com', and that missing dot can trick the user into arriving on a phishing website. Usually, the big companies buy all the correlated domains of their websites, but there are too many variations most of the time.

Each word is represented by a bag of character n-gram summed with the word itself. For a word w, $Gw \subset \{1, ..., G\}$ is the set of n-grams of w. The scoring function will become:

$$s(w, c) = \sum_{g \in \mathcal{G}_w} \mathbf{z}_g^\top \mathbf{v}_{c'}$$

**Natural Language Processing Model prediction and performance**

Using character-level n-grams, the model will exploit the sub-word information, increasing accuracy. In this way, vectors can be built for unseen words, like domains. The following figure shows an example of word embeddings creation during the model training period using the domain "google.com" from corpus.

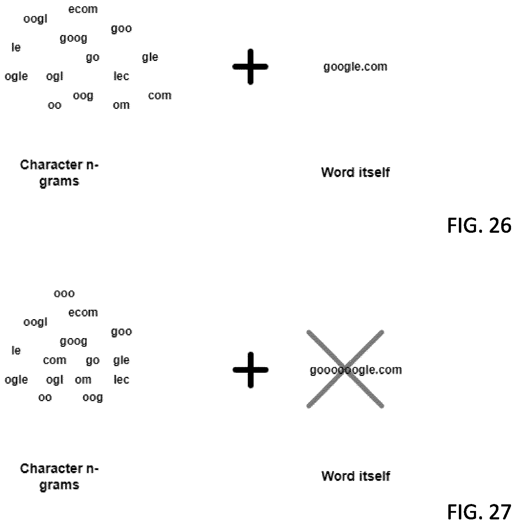

See FIG. 26.

At the inference (literature word for applying knowledge from a trained network to determine a new result, different from the training set) level, when the model should extract the embeddings for a newly generated domain like 'goooooogle.com', since the domain is a zero-day not in the corpus, the final word vector will be composed of the sum of n-grams.

See FIG. 27.

With solid and proper trained embeddings, the domains "google.com" and 'goooooogle.com' should be close to each other in the multi-dimensional feature space since they are similar and share almost the same set of n-grams.

Since it's an unsupervised learning model, the accuracy of the embeddings cannot be measured, and it is only possible to estimate the accuracy of the performed task, which is irrelevant after training.

Even so, it can be measured how robust the embeddings are by calculating the distance between similar domains in the feature space. Multiple algorithms can calculate the distance between vectors in a multi-dimensional space, like Euclidian distance, Cosine Similarity, Manhattan distance, Soft Cosine Similarity, Dot Product, etc.

The implementation pipeline used Cosine Similarity to measure the distance between word vectors.

$$\text{cosine similarity} = S_C(A, B) := \cos(\theta) = \frac{\mathbf{A} \cdot \mathbf{B}}{\|\mathbf{A}\| \|\mathbf{B}\|} = \frac{\sum_{i=1}^{n} A_i B_i}{\sqrt{\sum_{i=1}^{n} A_i^2} \sqrt{\sum_{i=1}^{n} B_i^2}},$$

After the training period, the similarity of multiple domains was measured, where some of them were already in the dataset and some of them were randomly generated.

A part of the results can be seen in the following table. It describes the top 10 correlated domains in the feature spaces based on the input using cosine similarity.

| Input Domain | google.com | fdnmgkfd.com |
|---|---|---|
| Output | | |
| 1 | googlec.com | fdsfd.com |
| 2 | google-adware.com | fdgfd.com |
| 3 | gooogle.com | fd4d.com |
| 4 | goooogle.com | fdd.com |
| 5 | googletune.com | fd7qz88ckd.com |
| 6 | google-sale.com | fdsyd.com |
| 7 | googlewale.com | fdg-ltd.com |

(continued)

| Input Domain | google.com | fdnmgkfd.com |
|---|---|---|
| Output | | |
| 8 | googledrie.com | fdrs-ltd.com |
| 9 | goooooogle.com | fcbd.com |
| 10 | goolge.com | fcb88d.com |

The domain 'google.com' was in the original dataset. When used in prediction, the results show that the network was able to learn and is not underfitted since the results are similar.

The second domain is a random number of characters with the top-level domain '.com'. Those types of domains are used in C&C attacks. The results show that the network is not overfitted, and it generalizes well on data never seen in the dataset.

Based on that information, the embeddings are strong enough to be used in a classifier.

The resulting embeddings will be concatenated with sparse data features and used in the tree boost classifier previously described.

The invention uses two very powerful neural networks to analyze, interpret and understand zero-day threats (threats that are so new/recent that cybersecurity vendors are not aware of them).

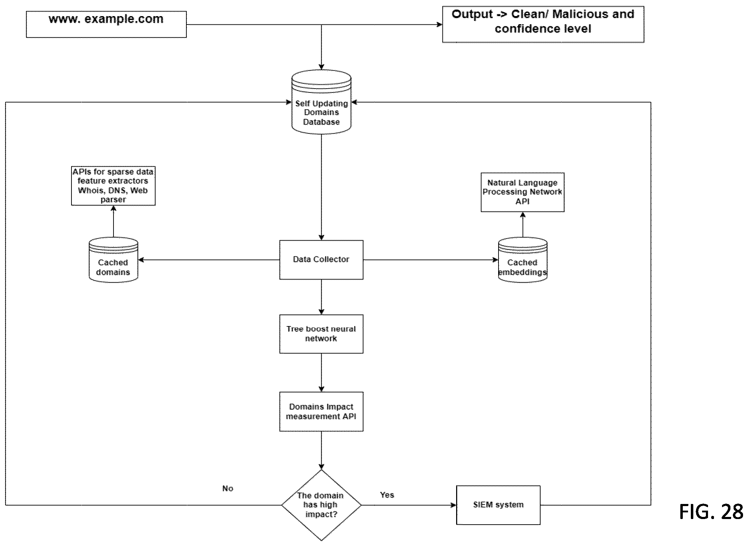

The invention achieves synergies from data engineering, machine learning, and research. It is a complex suite of multiple algorithms and programming techniques described in the following chart. The diagram flow in FIG. 28 shows the process of classifying a domain using the described software for predicting malicious domains.

**Claims**

1. A method for calculating the probability of a domain being malicious based on an input data set for processing in a computer system, the method comprising:

    • Dataset extraction, including extracting two types of input data:

        o Network data, selected from WHOIS, DNS, Reverse PTR, Domain Ranking and popularity data, Domain Authority;
        o Domain Word data;

    • Input data preprocessing including transforming the network data from sparse to dense;
    • Input data preprocessing including transforming the Domain Word data into vectorial representation using a trained neural network;
    • Data processing the preprocessed data through a trained tree-based neural network to determine the probability of a domain being malicious.

2. The method according to claim 1, wherein the data preprocessing method for representing Domain Words as vectors, is trained unsupervised, using a model to predict a target context based on a nearby word.

3. The method, according to claim 2, further comprising:

    • Data preprocessing method for representing words as vectors using n-grams
    • Data preprocessing method for filling missing data.
    • A method adapted to use cosine similarity for measuring the distance between domain embedding vectors;

        • A network adapted to sum the probabilities of words and subword embeddings;

4. The method, according to claims 1 to 3, wherein a data processing algorithm uses similarity scores, gains and thresholds for determining a probability in order to build a tree-based neural network adapted to combine sparse data from domains and word vector representations called embeddings.

5. The method according to claims 1 to 4, wherein a classifier uses a probability distribution to determine a risk factor.

6. The method, according to any of the claims 1 to 5, further comprising any Bayesian probability system for determining a risk score of a domain.

7. The method according to any of the claims 1-6 including a probability distribution system for cybersecurity to perform the method.

8. The method according to any of the claims 1 to 7, including a process for reading data in batches for optimizing the resources where the method is implemented.

9. The method according to any of the claims 1 to 8, including a process for minimizing the memory consumption by splitting the data reading and processing in CPU, RAM, Cache and HD memory.

10. The method according to claim 1-9 comprising parallel learning and inference based on splitting the data in quantiles.

11. The method according to claim 1-10 for training a hierarchical classifier, a binary tree on which each leaf node represents another context word code generated with the Huffman tree algorithm.

12. The method according to claim 1-11, further comprising a machine learning pipeline adapted to generate random trees and calculates each tree's gain and similarity score based on a threshold; calculating an output value and adjusting the weights based on the error rate (loss function), and through a second-order Taylor, approximation between the error rate (loss function), gradient (first derivate of the loss function) and hessian (second derivate of the loss function), calculating the needed adjustment for improving the accuracy based on a test dataset.

13. The method according to claim 1-12, further comprising a method adapted to use logistic functions for determining a probability score.

14. The method according to claim 1-13, further comprising a method adapted to use a minimizing negative likelihood function to calculate an error rate (loss function).

15. The method according to claim 1-14, further comprising a method adapted to combine unsupervised and supervised neural networks using a method adapted for training an unsupervised learning network on a supervised task that is ignored in the prediction step.

**Patentansprüche**

1. Verfahren zur Berechnung der Wahrscheinlichkeit, dass eine Domain bösartig ist, basierend auf einem Eingabedatensatz zur Verarbeitung in einem Computersystem, wobei das Verfahren umfasst:

   • Datensatzextraktion, einschließlich der Extraktion von zwei Arten von Eingabedaten:

   o Netzwerkdaten, ausgewählt aus WHOIS, DNS, Reverse PTR, Domain Ranking und Popularitätsdaten, Domain Authority;
   o Domainwortdaten;

   • Eingangsdatenvorverarbeitung, einschließlich der Umwandlung der Netzwerkdaten von spärlich zu dicht;
   • Eingangsdatenvorverarbeitung, einschließlich der Umwandlung der Domainwortdaten in eine vektorielle Darstellung unter Verwendung eines trainierten neuronalen Netzwerks;
   • Datenverarbeitung der vorverarbeiteten Daten durch ein trainiertes baumbasiertes neuronales Netzwerk, um die Wahrscheinlichkeit zu bestimmen, dass eine Domain bösartig ist.

2. Verfahren nach Anspruch 1, wobei das Datenvorverarbeitungsverfahren zur Darstellung von Domainwörtern als Vektoren unüberwacht trainiert wird, indem ein Modell zur Vorhersage eines Zielkontextes auf der Grundlage eines nahe gelegenen Wortes verwendet wird.

3. Verfahren nach Anspruch 2, ferner umfassend:

   • Datenvorverarbeitungsverfahren zur Darstellung von Wörtern als Vektoren unter Verwendung von n-Grammen

• Datenvorverarbeitungsverfahren zum Auffüllen fehlender Daten.
• Verfahren zur Verwendung von Cosinus-Ähnlichkeit zur Messung des Abstands zwischen Domain-Einbettungsvektoren;
• Netzwerk zur Summierung der Wahrscheinlichkeiten von Wörtern und Unterworteinbettungen;

4. Verfahren nach einem der Ansprüche 1 bis 3, wobei ein Datenverarbeitungsalgorithmus Ähnlichkeitswerte, Verstärkungen und Schwellenwerte zur Bestimmung einer Wahrscheinlichkeit verwendet, um ein baumbasiertes neuronales Netzwerk aufzubauen, das zur Kombination von spärlichen Daten aus Domains und Wortvektordarstellungen, genannt Einbettungen, geeignet ist.

5. Verfahren nach einem der Ansprüche 1 bis 4, wobei ein Klassifikator eine Wahrscheinlichkeitsverteilung verwendet, um einen Risikofaktor zu bestimmen.

6. Das Verfahren nach einem der Ansprüche 1 bis 5 umfasst ferner ein Bayessches Wahrscheinlichkeitssystem zur Bestimmung eines Risikoscores einer Domain.

7. Verfahren nach einem der Ansprüche 1 bis 6, einschließlich eines Wahrscheinlichkeitsverteilungssystems für Cybersicherheit zur Durchführung des Verfahrens.

8. Verfahren nach einem der Ansprüche 1 bis 7, einschließlich eines Prozesses zum Lesen von Daten in Chargen zur Optimierung der Ressourcen, in denen das Verfahren implementiert wird.

9. Verfahren nach einem der Ansprüche 1 bis 8, einschließlich eines Prozesses zur Minimierung des Speicherverbrauchs durch Aufteilung des Datenlesens und der Datenverarbeitung in CPU, RAM, Cache und Festplattenspeicher.

10. Verfahren nach Anspruch 1-9, das paralleles Lernen und Inferenz auf der Grundlage der Aufteilung der Daten in Quantile umfasst.

11. Verfahren nach Anspruch 1-10 zum Trainieren eines hierarchischen Klassifizierers, eines binären Baums, bei dem jeder Blattknoten einen anderen, mit dem Huffman-Baum-Algorithmus erzeugten Kontextwortcode darstellt.

12. Verfahren nach Anspruch 1-11, das ferner eine Pipeline für maschinelles Lernen umfasst, die so beschaffen ist, dass sie Zufallsbäume erzeugt und den Gewinn und die Ähnlichkeitsbewertung jedes Baums auf der Grundlage eines Schwellenwerts berechnet; einen Ausgabewert berechnet und die Gewichte auf der Grundlage der Fehlerrate (Verlustfunktion) anpasst und durch eine Taylor-Approximation zweiter Ordnung zwischen der Fehlerrate (Verlustfunktion), dem Gradienten (erste Ableitung der Verlustfunktion) und der Hessenmatrix (zweite Ableitung der Verlustfunktion) die erforderliche Anpassung zur Verbesserung der Genauigkeit auf der Grundlage eines Testdatensatzes berechnet.

13. Verfahren nach Anspruch 1-12, das ferner ein Verfahren umfasst, das angepasst ist, um logistische Funktionen zur Bestimmung einer Wahrscheinlichkeitsbewertung zu verwenden.

14. Verfahren nach Anspruch 1-13, ferner umfassend ein Verfahren, das angepasst ist, um eine minimierende negative Wahrscheinlichkeitsfunktion zur Berechnung einer Fehlerrate (Verlustfunktion) zu verwenden.

15. Verfahren nach Anspruch 1-14, ferner umfassend ein Verfahren, das geeignet ist, unbeaufsichtigte und überwachte neuronale Netze unter Verwendung eines Verfahrens zu kombinieren, das geeignet ist, ein unbeaufsichtigtes Lernnetz auf einer überwachten Aufgabe zu trainieren, die in dem Vorhersageschritt ignoriert wird.

## Revendications

1. Procédé de calcul de la probabilité de domaines malveillants sur la base d'un ensemble de données d'entrée destinées à être traitées dans un système informatique, le procédé comprenant :

• une extraction d'un ensemble de données, y compris l'extraction de deux types de données d'entrée :

o des données de réseau sélectionnées parmi les données de WHOIS, DNS, PTR inversés, le classement du domaine et la popularité des données, l'autorité de domaine ;
o des données de mots de domaine ;

• un prétraitement de données d'entrée, y compris la transformation des données de réseau éparses en des données de réseau denses ;
• un prétraitement de données d'entrée, y compris la transformation des données de mots de domaine en une représentation vectorielle à l'aide d'un réseau neuronal formé ;
• un traitement de données prétraitées par un réseau neuronal formé en structure d'arbre pour déterminer la probabilité qu'un domaine soit malveillant.

2. Procédé selon la revendication 1, dans lequel le procédé de prétraitement de données pour représenter des mots de domaine sous forme de vecteurs est formé sans supervision en utilisant un modèle pour prédire un contexte cible sur la base d'un mot proche.

3. Procédé selon la revendication 2, comprenant en outre :

• un méthode de prétraitement de données pour représenter des mots sous forme de vecteurs à l'aide de n-grammes
• un méthode de prétraitement de données pour combler les données manquantes
• un procédé adapté pour utiliser une similarité cosinus pour mesurer la distance entre des vecteurs de domaine incorporés

• un réseau adapté pour sommer les probabilités pour des incorporations des mots et sous-mots

4. Procédé selon les revendications 1 à 3, dans lequel l'algorithme de traitement de données utilise des scores de similarité, des gains et des seuils pour déterminer une probabilité afin d'établir un réseau neuronal formé en structure d'arbre qui est adapté pour combiner des données éparses du domaine et des représentations vectorielles de mots appelées incorporation.

5. Procédé selon les revendications 1 à 4, dans lequel le classificateur utilise une distribution de probabilité pour déterminer un facteur de risque.

6. Procédé, selon l'une quelconque des revendications 1 à 5, comprenant en outre tout système de probabilité Bayésien pour déterminer un score de risque d'un domaine.

7. Procédé selon l'une quelconque des revendications 1 à 6, comprenant un système de distribution de probabilité pour la cybersécurité afin d'effectuer le procédé.

8. Procédé selon l'une quelconque des revendications 1 à 7, comprenant un processus de lecture de données par lots pour optimiser les ressources où le procédé est mis en oeuvre.

9. Procédé selon l'une quelconque des revendications 1 à 8, comprenant un processus pour minimiser la consommation de mémoire en divisant la lecture et le traitement des données dans la mémoire CPU, RAM, cache et HD.

10. Procédé selon la revendication 1 à 9, comprenant l'apprentissage parallèle et l'inférence basé sur une division des données en quantiles.

11. Procédé selon la revendication 1 à 10 pour former un classificateur hiérarchique, un arbre binaire sur lequel chaque nœud feuille représente un autre contexte de mot code généré avec l'algorithme d'arbre de Huffman.

12. Procédé selon les revendications 1 à 11, comprenant en outre un pipeline d'apprentissage automatique adapté pour générer des arbres aléatoires et calculer le gain et le score de similarité de chaque arbre sur la base d'un seuil ; calculer une valeur de sortie et ajuster les poids sur la base du taux d'erreur (fonction de perte), et par une approximation de Taylor du second ordre entre le taux d'erreur (fonction de perte), le gradient (première dérivée de la fonction de perte) et le Hessien (seconde dérivée de la fonction de perte), calculer l'ajustement nécessaire pour améliorer la précision sur la base d'un ensemble de données de test.

13. Procédé selon les revendications 1 à 12, comprenant en outre un procédé adapté pour utiliser des fonctions logistiques pour déterminer un score de probabilité.

14. Procédé selon les revendications 1 à 13, comprenant en outre un procédé adapté pour utiliser une fonction visant à diminuer la probabilité négative pour calculer un taux d'erreur (fonction de perte).

15. Procédé selon les revendications 1 à 14, comprenant en outre un procédé adapté pour combiner des réseaux neuronaux non supervisés et supervisés en utilisant un procédé adapté pour former un réseau d'apprentissage non supervisé sur une tâche supervisée qui est ignorée dans l'étape de prédiction.

FIG. 1

FIG. 2

Probability
that the
domain is
malicious

Residuals

Number of records

FIG. 3

Probability
that the
domain is
malicious

FIG. 4

FIG. 5

FIG. 6

FIG. 7

FIG. 8A

FIG. 8B

Number of records

Similarity = 0   Number of records < 17.5

Similarity = 0.33   Number of records < 7.5      -0.5   Similarity = 1

-0.5      0.5, 0.5

Similarity = 1   Similarity = 2

Similarity = 0   Number of records < 17.5

Similarity = 0.33   Number of records < 12.5      -0.5   Similarity = 1

-0.5, 0.5      0.5

Similarity = 0   Similarity = 1

FIG. 9

FIG. 11

FIG. 10

FIG. 12

FIG. 13

EP 4 293 956 B1

Probability
that the
domain is
malicious

FIG. 14

Number of records < 7.5

-0.35

Number of records < 17.5

0.35, 0.35

-0.35

FIG. 15

FIG. 17

Loss Function Total with Regularization

λ=50  λ=4  λ=0

FIG. 16

Probability that the domain is malicious

Number of records

FIG. 18

Loss Function Total
with Regularization

-8    -4    0    Ovalues    4    8

FIG. 19

Loss Function Total
with Regularization

0

Ovalues

FIG. 20

EP 4 293 956 B1

34

FIG. 22

FIG. 21

35

FIG. 23

FIG. 24

FIG. 25

EP 4 293 956 B1

ecom

oogl

goo

goog

le

go gle

ogle ogl lec

oog com

oo om

**+**

google.com

**Character n-grams**

**Word itself**

FIG. 26

ooo

ecom

oogl

goo

goog

le

com go gle

ogle ogl om lec

oo oog

**+**

goooooogle.com

**Character n-grams**

**Word itself**

FIG. 27

FIG. 28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210377303 A

- US 20210360013 A